# EUROPÄISCHE PATENTSCHRIFT

(11) **EP 0 486 772 B1**
(45) Veröffentlichungstag und Bekanntmachung des Hinweises auf die Patenterteilung: **11.05.1994**
(21) Anmeldenummer: 91114147.1
(22) Anmeldetag: 23.08.1991
(51) Int. Cl.: F16D 65/092, F16D 69/00, F16D 55/00, F16D 65/847

(54) **Nutausbildung**
Groove configuration
Configuration de rainure

(30) Priorität: 20.11.1990 DE 4036908
(43) Veröffentlichungstag der Anmeldung: 27.05.1992
(73) Patentinhaber: RÜTGERS PAGID AKTIENGESELLSCHAFT, 45356 Essen (DE)
(72) Erfinder: Eckert, Armin, W-4355 Waltrop (DE)

(56) Entgegenhaltungen:
- DE-A- 2 539 557
- DE-A- 3 600 080
- DE-U- 8 507 640

## Beschreibung

Gegenstand der Erfindung ist eine besondere Nutausbildung bei Bremsbelägen insbesondere für Scheibenbremsen.

Es ist bekannt, beispielsweise bei Teilbelagscheibenbremsen den Reibbelag annähernd senkrecht zur Bewegungsrichtung der Bremsscheibe mit einer oder mehreren Nuten zu versehen, die einen über ihre ganze Länge gleichbleibenden Querschnitt aufweisen. Die Nuten haben die Aufgabe, beim Bremsvorgang in Gegenwart von Spritzwasser für einen ausreichenden Wasserabfluß zu sorgen. Außerdem sollen Spannungen, die durch die Temperaturwechselbeanspruchung auftreten, abgebaut werden.

Um eine Dämpfung geräuschbildender Schwingungen zu erreichen, wird in dem deutschen Gebrauchsmuster G 85 07 640.6 vorgeschlagen, diese Nuten paarweise unter einem Winkel zueinander und zur Längsachse der Reibfläche anzuordnen. Auch diese Nuten verlaufen mit konstantem Querschnitt vom oberen zum unteren Rand des Reibbelags. Die Nuten sollen außerdem den beim Bremsen entstehenden Abrieb abführen.

Im ungebremsten Zustand wird der Spalt zwischen Belag und rotierender Scheibe gespült, wobei sich innerhalb der Nuten eine Luftströmung zum Rand des Reibbelages ausbildet. Durch diese Luftströmung wird loser Abriebstaub entfernt.

Bei hohen Bremstemperaturen kommt es jedoch im Bereich sogenannter "hot spots" durch Reibschweißen zu Materialübertragungen zwischen Bremsscheibe und Reibbelag. Dadurch erhöht sich die Oberflächenrauhigkeit und damit der Abrieb. Da ein Teil des Staubes bei hohen Temperaturen sowohl auf der Bremsscheibe wie auch auf dem Belag festbrennen kann, wird er beim Lüften der Bremse auch nicht durch den Luftstrom ausgetragen. Die erhöhte Rauhigkeit verbunden mit Materialumwandlungen durch die hohen Temperaturen führt zu einer Verriefung der Bremsscheibe und Komfortproblemen wie Geräuschentwicklung und Lenkraddrehschwingungen.

Es bestand daher die Aufgabe, die Nut bei Reibbelägen so auszubilden, daß die Bremstemperaturen abgesenkt werden, um so den Abrieb zu vermindern und dessen Festbrennen zu verhindern.

Die Aufgabe wird erfindungsgemäß dadurch gelöst, daß mindestens eine Nut so ausgebildet ist, daß sie von der Vorderkante des Reibbelages sich stetig verjüngend in Drehrichtung der Bremsscheibe oder -trommel innerhalb des Oberflächenbereiches des Reibbelages verläuft und dabei einen Winkel zwischen 75 und 105 ° zum Radius der Bremsscheibe bzw. zum Axialschnitt der Bremstrommel bildet.

Die maximale Nuttiefe beträgt vorzugsweise etwa 2/3 der Reibbelagsdicke. Die Querschnittsform der Nut kann halbrund, rechteckig oder dreieckig sein und spielt nur eine untergeordnete Rolle. Die Verjüngung kann durch Reduzierung der Nuttiefe oder der Nutbreite erreicht werden, wobei die letztere Maßnahme wegen der über längere Zeit gleichbleibenden Luftverteilung bevorzugt wird. Es ist aber auch eine Kombination beider Maßnahmen möglich.

Je nach Höhe des Reibbelages wird dieser mit einer Nut oder mehreren Nuten versehen. Ihre Länge beträgt vorzugsweise 30 bis 60 % der Belagbreite.

Die Erfindung wird an dem nachfolgenden Beispiel näher erläutert.

Ein Bremsbelagpaar, wie es beispielsweise für die Teilbelagscheibenbremse des VW-Golf verwendet wird, mit einer Reibbelagdicke von 15 mm, einer Reibbelaghöhe von maximal 4,5 cm und einer Reibbelagbreite von 9 bzw. 12 cm wird einer Fahrgeschwindigkeit von 80 km/h, einem Bremsdruck von 80 bar und 15 Folgebremsungen im Abstand von 45 s unterworfen. Dabei wird eine Endtemperatur von 603 °C erreicht.

Das Programm umfaßt außerdem weitere Bremstests bei 80 km/h und steigendem Druck von 20 bis 100 bar, bei konstantem Druck von 80 bar und steigender Geschwindigkeit von 40 bis 180 km/h, 5 Stoppbremsungen usw. zur Bestimmung des Reibwertes unter den verschiedensten Bedingungen. Das gesamte Programm wird zweimal durchgefahren wobei ein Gesamtverschleiß des Reibbelags von 7,79 g festgestellt wird.

In ein zweites Bremsbelagpaar, das dem ersten völlig entspricht, werden ausgehend von der Vorderkante in Drehrichtung der Bremsscheibe zwei parallel auf Kreisbahnen verlaufende Nuten mit kreissegmentförmigem Querschnitt mit einer maximalen Breite von 10 mm und einer maximalen Tiefe von 5 mm so eingefräst, daß die 4 cm langen Nuten sich in Drehrichtung der Bremsscheibe stetig verjüngen. An diesem mit der erfindungsgemäßen Nutausbildung versehenen Bremsbelagpaar wurde das gleiche Testprogramm wie mit dem nutfreien Paar durchgeführt. Es wurden eine Endtemperatur von 530 °C und ein Gesamtverschleiß von 4,92 g gemessen.

Damit ist erwiesen, daß durch die erfindungsgemäße Nutausbildung bei Reibbelägen, die Bremstemperaturen erheblich abgesenkt und damit der Abrieb deutlich vermindert werden kann. Der Reibwert ändert sich hingegen nicht.

Die Nuttiefe von 5 mm wurde deshalb gewählt, um das Kühlverhalten bei halber Reibbelagdicke zu simulieren, da die Nuttiefe bei neuen Belägen vorzugsweise 2/3 der Reibbelagdicke betragen soll, d. h. also 10 mm. Da sich bei den meisten Bremsbelägen zwischen Reibmaterialschicht und Trägerplatte eine Haftschicht befindet, die zwar Notbremseigenschaften besitzt aber doch eine andere Zusammensetzung als das Reibmaterial hat, ist es nicht sinnvoll die Nut bis in diese Schicht auszubilden.

Die Nutausbildung kann entweder durch Fräsen oder durch eine entsprechende Formgebung der Gesenke für den Preßvorgang erfolgen. Vom Herstellungsverfahren wird natürlich auch die Nutform mitbestimmt.

Die aufgezeigten Probleme sind nicht auf Teilbelagscheibenbremsen beschränkt. Sie betreffen in ähnlicher Weise Vollbelagscheibenbremsen, Trommelbremsen und Kupplungen. Auch hier kann durch die erfindungsgemäße Nutausbildung die Bremstemperatur und damit der Abrieb vermindert werden.

## Patentansprüche

1. Nutausbildung bei Bremsbelägen, **dadurch** **gekennzeichnet,** daß mindestens eine Nut so ausgebildet ist, daß sie von der Vorderkante des Reibbelages sich stetig verjüngend in Drehrichtung der Bremsscheibe oder -trommel verläuft und dabei einen Winkel zwischen 75 und 105 ° zum Radius der Bremsscheibe bzw. Axialschnitt der Bremstrommel bildet.

2. Nutausbildung nach Anspruch 1, **dadurch** **gekennzeichnet,** daß sich die Nuttiefe in Drehrichtung reduziert.

3. Nutausbildung nach einem der Ansprüche 1 oder 2, **dadurch gekennzeichnet**, daß sich die Nutbreite in Drehrichtung reduziert.

4. Nutausbildung nach einem der Ansprüche 1 bis 3, **dadurch gekennzeichnet**, daß die maximale Nuttiefe etwa 2/3 der Reibbelagdicke und die Nutlänge 30 bis 60 % der Belagbreite entspricht.

## Claims

1. A groove pattern of friction brake lining wherein at least one groove is formed whereby it extens from the leading edge of the friction brake lining continuously in the direction of rotation of the brake drum or disk and forming an angle of 75 to 105° to the radius of the brake disk or the axial section of the brake drum.

2. A groove pattern of claim 1 wherein the depth of the groove decreases in the direction of rotation.

3. A groove pattern of claims 1 or 2 wherein the groove width decreases in the direction of rotation.

4. A groove pattern of one of the claims 1 to 3 wherein the maximum groove depth is about two thirds the thickness of the friction lining thickness and the groove length is 30 to 60 % of the friction lining width.

## Revendications

1. Configuration de rainure dans de garnitures de freins, caractérisée en ce qu'au moins une gorge ou rainure est formée de manière à s'étendre en s'amenuisant de façon continue à partir du bord avant de la garniture de friction dans le sens de rotation du disque ou du tambour de frein et former ainsi un angle entre 75 et 105° par rapport au rayon du disque de frein ou à la section axiale du tambour de frein.

2. Configuration de rainure selon la revendication 1, caractérisée en ce que la profondeur de rainure est réduite dans le sens de la rotation.

3. Configuration de rainure selon l'une des revendications 1 ou 2, caractérisée en ce que la largeur de rainure est réduite dans le sens de rotation.

4. Configuration de rainure selon l'une des revendications 1 à 3, caractérisée en ce que la profondeur de rainure maximum correspond sensiblement aux 2/3 de l'épaisseur de la garniture de friction et la longueur utile correspond à 30 jusqu'à 60 % de la largeur de la garniture.
